# FASCICULE DE BREVET EUROPEEN

(11) **EP 1 995 141 B1**
(45) Date de publication et mention de la délivrance du brevet: **06.05.2015**
(21) Numéro de dépôt: 08104010.7
(22) Date de dépôt: 19.05.2008
(51) Int. Cl.: B60T 13/57, B60T 13/575

(54) **Servomoteur pneumatique d'assistance de freinage à changement de rapport d'assistance**
Pneumatischer Bremskraftverstärker mit wechselndem Verstärkungsverhältnis
Pneumatic brake booster with changing boost ratio

(30) Priorité: 21.05.2007 FR 0703601
(43) Date de publication de la demande: 26.11.2008
(73) Titulaire: Robert Bosch GmbH, 70442 Stuttgart (DE)
(72) Inventeur: Richard, Philippe, 77500 Chelles (FR); Lacroix, Stéphane, 77220 Tournan en Brie (FR); Anderson, Chris, 75002 PARIS (FR); Sprocq, Raynald, 77450 Esbly (FR)

(56) Documents cités:
- US-A1- 2004 255 770
- US-A1- 2005 092 167
- US-B1- 6 334 383

## Description

La présente invention a pour objet un servomoteur pneumatique d'assistance de freinage avec un changement du rapport d'assistance. Cette assistance est renforcée selon la puissance de freinage demandée. L'invention a notamment pour but de fournir une assistance plus puissante en cas de freinage fort. Elle concerne les servomoteurs pneumatiques d'assistance de freinage dont la loi de freinage possède une inflexion quand on passe d'un freinage normal, pour lequel l'assistance est normale, à un freinage fort pour lequel l'assistance doit être plus forte, avec donc un surcroît d'assistance.

Un servomoteur pneumatique d'assistance de freinage comporte dans son principe une chambre avant à volume variable séparée d'une chambre arrière également à volume variable par une cloison formée par une membrane étanche et souple et par une plaque-jupe rigide. La jupe rigide entraîne un piston pneumatique prenant appui, par l'intermédiaire d'une tige de poussée, sur un piston primaire d'un maître cylindre d'un circuit hydraulique de freinage, typiquement un maître cylindre tandem. La chambre avant, placée du côté du maître cylindre, est reliée pneumatiquement à une source de vide. La chambre arrière, opposée à la chambre avant et placée du côté d'une pédale de frein, est reliée pneumatiquement, de manière contrôlée par une valve, à une source de fluide propulseur, typiquement de l'air sous pression atmosphérique. Au repos, c'est à dire lorsqu'un conducteur n'appuie pas sur la pédale de frein, les chambres avant et arrière sont connectées entre elles par un premier clapet alors que la chambre arrière est isolée par rapport à la pression atmosphérique par un deuxième clapet. Lors du freinage, la pédale de frein directement liée à une tige de commande a pour effet d'isoler tout d'abord la chambre avant par rapport à la chambre arrière en fermant le premier clapet, puis d'admettre de l'air dans la chambre arrière en ouvrant le deuxième clapet. Cette admission d'air a pour effet de propulser la cloison et de mettre en oeuvre l'assistance de freinage pneumatique.

Un effort d'un conducteur sur une pédale de frein, via la tige de commande et un palpeur, ainsi que l'effort de l'assistance de freinage via un piston pneumatique creux se combinent et se concentrent tous les deux dans le servomoteur pneumatique d'assistance de freinage sur un disque de réaction. Sur une première face du disque de réaction, située du coté de la tige de commande, les deux efforts sont appliqués sur deux surfaces adjacentes, en général concentriques, en des proportions figées fixant ainsi un rapport constant d'assistance au freinage. Le disque de réaction subit par ailleurs, sur sa seconde face, via une coupelle qui le contient, un effort de réaction exercé par un circuit hydraulique de freinage situé du coté du maître cylindre.

Ainsi l'effort de freinage d'un conducteur, transmis par une pédale de frein par l'intermédiaire d'une tige de commande et de son palpeur et l'effort de l'assistance de freinage du piston pneumatique creux relié à la jupe rigide du servomoteur pneumatique, se combinent ensemble sur le disque de réaction.

Les problèmes rencontrés lors des freinages, notamment lors des freinages forts ou d'urgence, sont liés aux aptitudes des conducteurs. En effet, si un freinage doit être fort, il convient que l'assistance au freinage soit puissante. Par exemple, une proportion entre un effort significatif appliqué par un conducteur et l'effort appliqué en correspondance par un servomoteur pneumatique d'assistance de freinage sur une commande hydraulique de frein doit alors avoir une valeur élevée, par exemple supérieure à dix. Par opposition, notamment dans le cadre de la circulation des véhicules dans le trafic urbain, une telle valeur élevée se traduit par une conduite heurtée, désagréable pour les passagers et le conducteur. Or adopter pour les freinages un rapport de proportionnalité intermédiaire entre un rapport faible, utile pour doser facilement de faibles efforts de freinage et, à l'opposé un rapport fort pour des freinages puissants, n'apporte que peu de résultats satisfaisants pour l'un ou l'autre cas.

Une solution existante consiste à modifier l'assistance de freinage, notamment par une assistance hydraulique ou pneumatique complémentaire, afin de donner au freinage, à partir d'un certain effort, une proportionnalité de l'assistance qui est plus élevée que celle qui prévaut quand l'effort est faible.

Avec une telle assistance complémentaire, on peut constater, sur une courbe d'assistance montrant l'effort appliqué sur la tige de poussée d'un maître cylindre d'un circuit hydraulique de freinage en fonction de l'effort d'un conducteur sur la tige de commande, que cette courbe suit une pente linéaire proportionnelle au ratio de la surface du disque de réaction par la surface d'un palpeur à l'extrémité de la tige de commande. Puis cette courbe subit une inflexion à partir d'une certaine valeur de l'effort du conducteur : sa pente devient plus élevée car une assistance pneumatique complémentaire et supplémentaire intervient. Puis cette courbe subit une seconde inflexion pour laquelle la pente redevient plus faible, suite à un effet connu de saturation de l'assistance. Cet effet est rencontré lorsque la chambre arrière est portée à la plus haute pression disponible, en l'occurrence celle de l'air ambiant.

US 2005/0092167 A décrit un servomoteur avec un disque de réaction et un ouverture de clapet conventionnel. Le mécanisme utilisé pour appliquer cette double assistance pneumatique du servomoteur comporte un plongeur solidaire de la coupelle contenant le disque de réaction. Ce plongeur est associé à une soucoupe. Au delà d'une certaine force de freinage, la jupe prend appui sur un équipage mobile de transmission des efforts de freinage par l'intermédiaire de la soucoupe. La jupe entraîne la tige de poussée mais avec un rapport d'assistance modifié dépendant de la raideur de la soucoupe et d'un ressort associé.

En agissant de la sorte, au moment de cet appui complémentaire, on rompt le rapport de proportionnalité fixé par le rapport des surfaces. Une première fonction de ce mécanisme est de détecter à partir de quelle valeur donnée de l'effort appliqué par le conducteur il convient de mettre en oeuvre une assistance plus forte. Une autre fonction est de fixer un nouveau rapport de proportionnalité qui est plus favorable aux freinages forts.

L'action de translation de la tige de commande de frein en direction du disque de réaction permet d'ouvrir un clapet d'admission de l'air dans la chambre arrière. L'objectif est de contribuer, dans le cas d'un freinage d'urgence, rapidement et proportionnellement, à une action d'assistance complémentaire de freinage du piston pneumatique. Cette contribution complémentaire s'exerce en complément de l'action directe de la tige de commande et ou en association avec l'ensemble plongeur-soucoupe, sur la tige de poussée de l'équipage de transmission des efforts de freinage pour ouvrir en plus grand le clapet d'admission.

Dans une telle réalisation, la soucoupe et le plongeur sont positionnés après le disque de réaction, dans la chambre avant du servomoteur de freinage. Cette disposition pose un problème quant à la compacité du servomoteur de freinage à l'intérieur d'un compartiment moteur. L'exigence du marché veut que le compartiment moteur soit de plus en plus petit, tout en conservant malgré tout un volume suffisant pour le moteur, au profit de l'habitacle du véhicule.

Dans la solution de l'invention, on remédie à ces problèmes tout en conservant l'idée d'un relais mécanique simple ne nécessitant pas la conception d'un nouveau type de servomoteur pneumatique d'assistance. On évite toutes les exigences de mise au point ou d'homologation nécessaires. En outre l'invention offre la possibilité de s'adapter sur les servomoteurs d'assistance de freinage déjà réalisés.

Dans l'invention, on utilise le déplacement du disque de réaction pour ouvrir plus en grand le clapet d'admission d'air dans la chambre arrière. Ainsi, lors d'un freinage normal, le clapet s'ouvre normalement. Lors d'un freinage brusque, le gonflement d'une partie extrudée du disque est utilisé pour appuyer, par l'intermédiaire d'une canne en particulier creuse, sur le clapet et l'ouvrir plus en grand, voire ouvrir un autre clapet.

Un principe de l'invention est donc l'utilisation du caractère déformable du disque de réaction grâce, par exemple à l'utilisation d'un matériau du type caoutchouc.

Dans l'invention, dans le cas du freinage brusque, du fait de la plus grande ouverture du clapet, la vitesse de réaction du servomoteur de freinage est augmentée. Pour un intervalle de temps donné et ou un effort sur la pédale donné, avec l'invention, le rapport d'assistance de freinage ainsi mis en oeuvre et correspondant à ces deux efforts cumulés, sera alors plus important, correspondant à un ratio ou une pente plus grande. Ce rapport d'assistance mis en oeuvre par une ouverture forcée du clapet d'admission d'air dans la chambre arrière est également plus important que le rapport d'assistance faisant intervenir un ensemble plongeur-soucoupe.

L'invention a donc pour objet un servomoteur pneumatique d'assistance comme décrit dans revendication 1.

L'invention sera mieux comprise à la lecture de la description qui suit et à l'examen des figures qui l'accompagnent. Celles-ci ne sont présentées qu'à titre indicatif et nullement limitatif de l'invention. Les figures montrent:
- Figure 1 : une vue en coupe générale d'un servomoteur pneumatique d'assistance de freinage selon l'état de la technique;
- Figure 2a et 2b : selon l'invention, des courbes représentatives respectives des efforts de freinage sans changement de rapport de puissance et avec changement de rapport de puissance;
- Figure 3a et 3b : deux vues en coupe, selon deux variantes, d'une section du premier et du second dispositif d'admission, de la partie tige de commande, du corps de piston, du disque de réaction d'un servomoteur d'assistance de freinage conforme à l'invention.

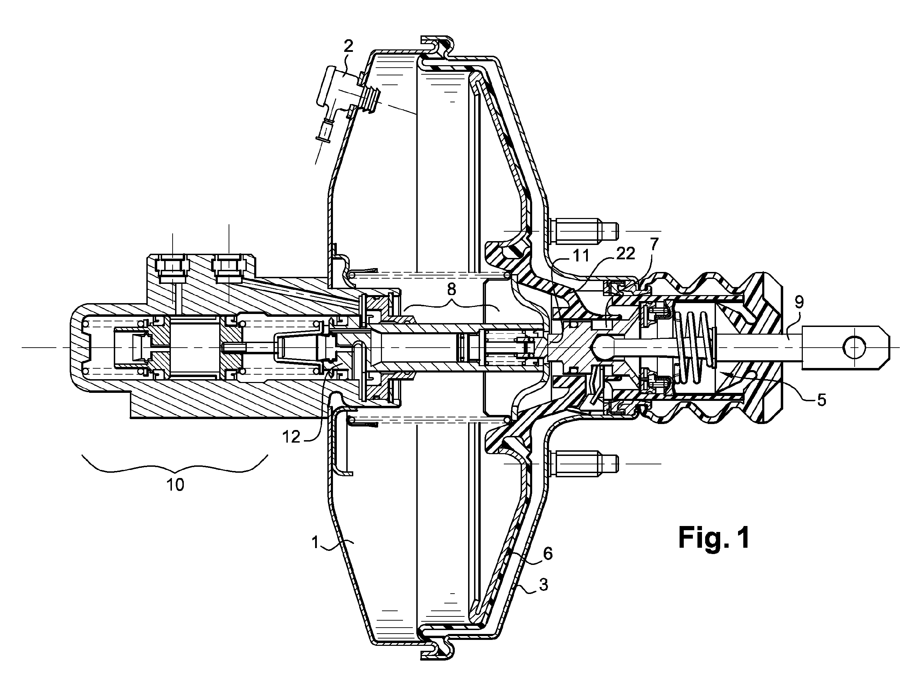

La Figure 1 montre un servomoteur pneumatique d'assistance de freinage selon l'état de la technique. Ce servomoteur pneumatique d'assistance de freinage comporte une chambre avant 1 en relation par une prise 2 avec une source de vide non représentée. Typiquement la source de vide peut être constituée par une prise des gaz d'admission d'un moteur à essence d'un véhicule. Pour un véhicule avec un moteur diesel, on utiliserait une source de vide externe. Le servomoteur pneumatique d'assistance de freinage comporte également une chambre arrière 3 en relation, par exemple par un clapet 4, avec une arrivée 5 haute pression : typiquement de l'air à pression ambiante. Le servomoteur pneumatique d'assistance de freinage comporte par ailleurs une cloison mobile 6 munie habituellement d'une jupe rigide et d'une membrane étanche. La membrane empêche la communication pneumatique entre les deux chambres. La cloison 6, au niveau du corps de piston, est percée d'un orifice étanche 7 pour laisser passer un équipage mobile 8. L'équipage 8 est relié mécaniquement d'une part par une tige de commande de frein 9 à une pédale de frein, et d'autre part à un circuit 10 hydraulique de freinage. Le principe de l'assistance procurée par un tel servomoteur pneumatique d'assistance de freinage est le suivant: sous l'action de la tige de commande de frein 9, un clapet 4 se dégage, par lequel l'air ambiant s'introduit dans la chambre arrière 3. L'air ambiant exerce alors une pression sur la cloison 6 qui entraîne, en complément de l'appui d'un palpeur 11 situé à l'extrémité de la tige de commande 9, l'équipage mobile 8 de manière à ce qu'une extrémité 12 de ce dernier actionne le circuit hydraulique de freinage 10.

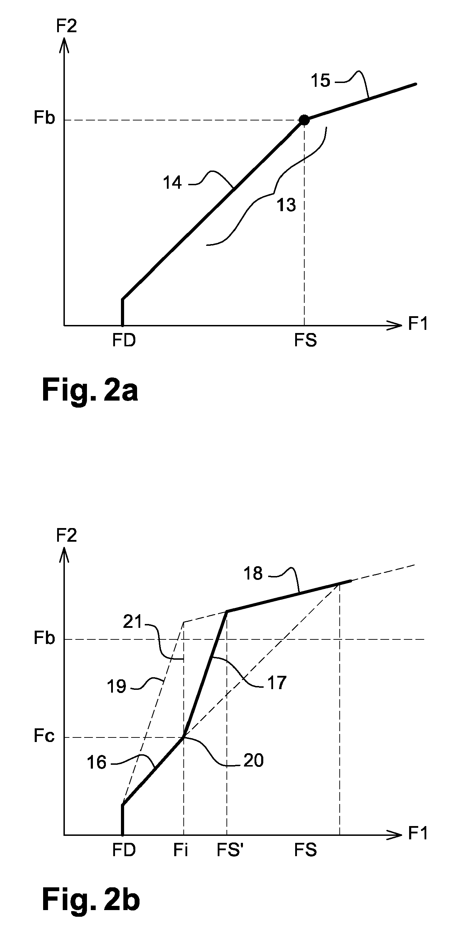

Tel quel, ce système est connu. Il conduit à une loi de freinage, courbe 13 de la figure 2a, dans laquelle une force F1 appliquée par un conducteur sur la tige 9 retentit en une force F2 appliquée par l'équipage mobile sur le circuit hydraulique de freinage 10. La courbe 13 montrée indique qu'à partir d'une force de seuil FD l'assistance de freinage joue selon une correspondance linéaire 14. Elle montre également qu'à partir d'une force FS, dite force de saturation, l'assistance de freinage produite par le servomoteur pneumatique d'assistance de freinage ne joue plus que selon une correspondance 15, soit parce que la cloison mobile 6 ne peut plus se déplacer en direction de la chambre avant 1, soit parce qu'elle a atteint la limite de cette chambre, soit plutôt parce que la chambre arrière 3 est saturée à la pression atmosphérique.

D'une manière connue la force de saturation doit se placer au-delà d'une force Fb appliquée au circuit hydraulique pour laquelle un blocage des roues du véhicule est provoqué. La valeur de la force FD est fixée par des choix correspondant à un confort du conducteur, lui permettant notamment de poser son pied sur la pédale de frein sans freiner. La pente de l'assistance 14 pour un servomoteur pneumatique d'assistance de freinage classique est linéaire et dépend pour l'essentiel du rapport des surfaces entre une première surface correspondante à une face d'un disque de réaction et une seconde surface correspondante à la surface du palpeur 11 en contact avec la première surface.

Par comparaison, la figure 2b montre le perfectionnement apporté par l'invention. La courbe de correspondance entre la force appliquée par le conducteur et la force appliquée sur le circuit hydraulique subit une première évolution 16 comparable à l'évolution 14 de la courbe 13. Cependant, à partir d'une valeur donnée de force Fi, intermédiaire entre la force de seuil FD et la force de saturation FS, le mécanisme de l'invention provoque une assistance complémentaire de sorte que la pente de l'assistance comporte un segment 17 beaucoup plus relevé. De ce fait, la force de saturation FS' rencontrée avec le dispositif de l'invention est bien inférieure à la force de saturation FS de la solution classique. Au-delà de la force de saturation FS', la courbe de correspondance comporte un segment 18 analogue au segment 15. On verra par la suite comment il est possible de régler la valeur de la force intermédiaire Fi.

Ce réglage conduit à créer un segment 16 et un segment 17 ou, dans certains cas, par exemple pour des voitures de sport, à proposer, dès le début, une assistance dont la pente 19 est la même que celle du segment 17. A la rencontre des segments 16 et 17 se trouve un point d'inflexion 20 auquel la force d'assistance augmente proportionnellement beaucoup plus rapidement.

Le mécanisme d'admission complémentaire d'air ajouté par l'invention a par ailleurs pour effet d'éviter que la pente 17 ne devienne infinie (en pratique beaucoup trop forte) selon une verticale 21. Pour fixer les idées, on peut admettre que le rapport de proportionnalité pour les segments 14 et 16 est de l'ordre de quatre à six alors qu'il pourrait atteindre un rapport supérieur à dix pour les segments 17 ou 19.

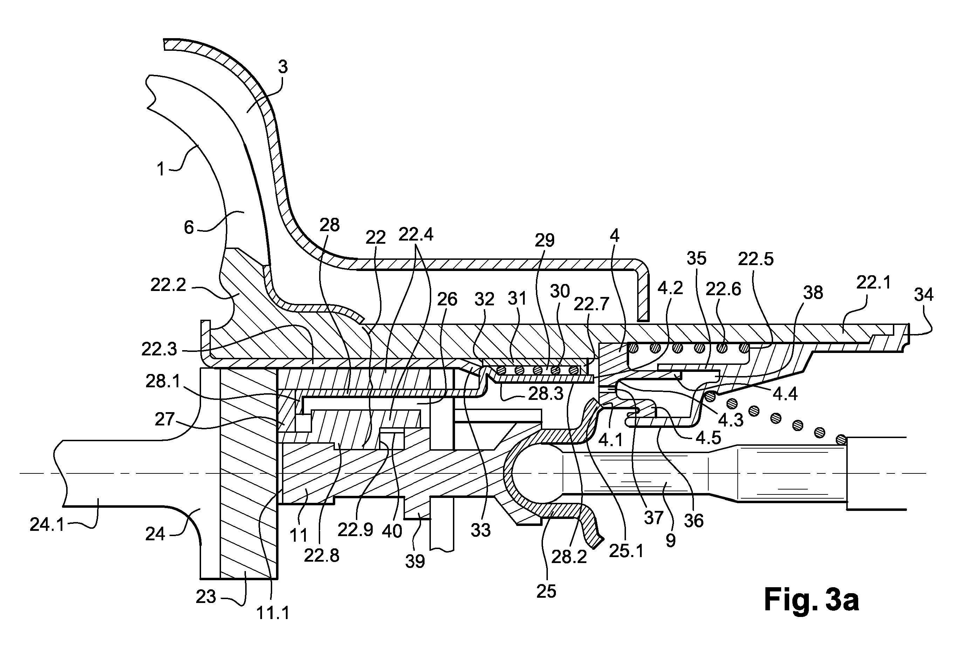

La figure 3a montre une vue en coupe d'une moitié d'une section du second dispositif d'admission, de la tige de commande 9, du piston 22 et du disque de réaction 23 d'un servomoteur de l'invention. Le piston 22 comporte ainsi un corps formé par une tige 22.1 de piston qui débouche à l'extérieur du servomoteur. La tige 22.1 est creuse et cylindrique. La tige 22.1 appuie sur et entraîne par sa base 22.2 la jupe 6. La tige 22.1 comporte une chemise 22.3 interne sertie sur sa paroi interne. La chemise 22.3 reçoit en coulissement le disque de réaction 23 porté par un plateau ou coupelle 24. La coupelle 24 appuie par une tige de poussée 24.1 sur un piston primaire d'un maître cylindre (non représenté). La coupelle 24, le disque 23 et la chemise 22.3 sont cylindriques circulaires. Le disque de réaction 23 est ainsi contenu par la chemise 22.3 du piston pneumatique 22. Sur le disque 23 appuie la surface 11.1 de l'extrémité du palpeur 11 ainsi que la base d'une bague cylindrique circulaire 22.4 sertie sur la chemise 22.3 du piston 22. La bague 22.4 est formée par deux voiles cylindriques circulaires concentriques. La bague 22.4 est emportée par le piston 22. Le rapport normal d'effort d'assistance est celui correspondant au rapport des surfaces en appui sur la surface du disque de réaction 23 par rapport à la surface totale du disque de réaction 23.

Au coeur de la bague 22.4, dans l'invention, entre les deux voiles, on a ménagé un espace 26. Cet espace 26 occupé à la base par une pastille 27 au contact du disque de réaction 23. De préférence la pastille 27 a une forme de couronne circulaire. La pastille 27 est soumise par sa base au contact du disque de réaction, au gonflement du disque 23 quand ce dernier subit les effort du palpeur 11 et de la bague d'assistance 22.4 emportée par le piston 22.

Un siège 25 du palpeur 11 dans lequel prend place la tige de commande 9 a une forme de vasque. Le bord supérieur de cette vasque forme une valve 25.1 du clapet 4 d'admission d'air. Le clapet 4 comporte par ailleurs un siège 4.1. Le siège 4.1 du clapet 4 reçoit la valve 25.1 en appui. Dans un exemple le siège 4.1 est en caoutchouc, la valve 25.1 est en acier.

Lors d'une action de freinage normal, la tige de commande 9 prend appui, via le siège 25 et la surface 11.1 du palpeur 11 sur le disque de réaction 23. Ce faisant, la valve 25.1 du siège 25 du palpeur 11 perd contact avec le siège 4.1 du clapet 4. Le clapet 4 s'ouvre, l'air pénètre alors dans la chambre arrière 3 par cette entrée d'air. Cet arrivée d'air correspondant a pour effet de déplacer la cloison 6 vers la chambre 1. Dans le même mouvement, le piston 22 et notamment la bague 22.4, prend appui, à son tour, sur le disque de réaction 23.

Dans le même mouvement également, la tige 22.1 du corps du piston pneumatique est emportée par la jupe 6. Par une rive 22.5 et un ressort 22.6 en compression entre la rive 22.5 et le clapet 4, la tige 22.1 repousse alors le siège 4.1 contre la valve 25.1. Le clapet se ferme. A ce stade du freinage l'ensemble composé de la tige de commande, du disque de réaction et de la tige de poussée est alors maintenu dans une position d'équilibre. Le véhicule freine en correspondance d'une pression disponible dans le maître cylindre, elle même proportionnelle à la pression subie par le disque 23. Dans ce cas le disque de réaction propose un relief, opposé à celui de la coupelle 24, sensiblement plat.

Lors d'un freinage brusque, on imagine que l'effort du conducteur sur la pédale de frein est plus puissant. Dans ce cas, le disque 23 subit une déformation de sa face coté palpeur, à l'endroit de la pastille 27. Le disque subit une extrusion. La bosse en excroissance due à cette extrusion est orientée vers le clapet 4. Une excroissance du même type coté palpeur modifie par ailleurs quelque peu le rapport théorique d'assistance représenté par la courbe 14 de la figure 2a car la section en appui du disque 23 sur le palpeur 11 devient plus faible. Ainsi le rapport des surfaces au contact du disque de réaction sur celle du palpeur devient sensiblement plus important impliquant une pente 14 de la courbe 13 plus prononcée.

A l'endroit du contact de la surface 11.1 du palpeur 11 sur le disque 23, la bague 22.4 est solidaire d'un voile interne cylindrique 22.8 fixé à la bague 22.4, par exemple par des ponts. Ce voile 22.8 possède de plus, du coté de l'axe de la tige de commande 9, un redan 22.9 dans lequel vient s'appuyer un épaulement 39 du palpeur 11. Un jeu de confort 40 sépare au repos l'épaulement 39 du redan 22.9. Ce jeu 40 permet à la tige de commande 9 d'agir dans les tous premiers instants de freinage en prenant appui sur le disque de réaction 23 avant que la bague 22.4 et sa partie interne 22.8 en fasse autant lors de la translation du piston pneumatique.

Plus essentiellement, le dispositif de l'invention comporte une canne, ici creuse, 28 cylindrique circulaire et possédant des arcades laissant passer les ponts reliant la partie interne 22.8 de la bague 22.4 à cette même bague 22.4. La canne 28 prend appui par sa base 28.1 sur la face de la pastille 27 opposée à celle en contact avec le disque 23 de réaction. La canne 28 possède à son sommet un couronnement 28.2. Le couronnement 28.2 vient en appui sous une autre partie 4.2 du siège du clapet 4. Une paroi 28.3 de la canne 28, située près du couronnement 28.2, délimite avec une partie supérieure 31 de la chemise 22.3, une cavité 29. La partie 31 de la chemise 22.3 est surmontée d'une partie recourbée 22.7. La cavité 29 renferme un ressort 30 à boudins. Le ressort 30 est en compression par une extrémité sous la partie recourbée 22.7 et par son autre extrémité par un bossage 32. Ce bossage 32 est en butée contre un décroché 33 de la chemise 22.3.

Ainsi l'extrusion du disque de réaction 23 face à la pastille 27, à partir d'un certain effort de freinage, est telle qu'elle déplace non seulement la pastille 27 et le palpeur 11 via sa surface d'appui 11.1 mais, surtout, elle déplace l'extrémité de la canne 28 au contact de la pastille 27. En conséquence la canne 28, tout en comprimant le ressort 30, glisse au sein du corps de piston pneumatique 22, et au sein de la bague 22.4, jusqu'à ce que son couronnement 28.2 atteigne le clapet 4 de valve. Cette canne 28 ouvre alors en grand le clapet 4 en repoussant le siège 4.2 de ce clapet 4, au delà même de l'ouverture provoquée par le décollement de la valve 25.1. En simplifiant, tout se passe comme si la valve 25.1 se dirigeait vers le disque 23, alors que le siège 4.2 (et 4.1 aussi) s'en éloignait. L'ouverture du clapet devient bien plus grande que pour l'ouverture provoquée par le déplacement de la tige de commande seule. Par la présence du bossage 32, le ressort 30 est contraint davantage. En poussant ce siège 4.2, le clapet 4 s'ouvre d'autant en laissant l'air s'engouffrer dans la chambre 3 et en apportant ainsi une assistance pneumatique supplémentaire.

On peut noter que si la pression et la poussée exercée par l'extrusion du disque de réaction 23 face à la pastille 27 est inférieure à la charge du ressort 30, alors l'ensemble pastille-canne-ressort se comporte comme un ensemble rigide et solidaire vis à vis du corps de piston pneumatique 22. A l'opposé, si la force est supérieure à la charge du ressort 30 le clapet 4 s'ouvre en plus grand. Le palpeur 11 commandé par la tige de commande 9, dans un second temps, rattrape le jeu 40 tout en venant en butée sur le piston 22.

De plus, le réglage de la raideur du ressort 30 et le changement de section du à la mise en butée du palpeur 11 par l'intermédiaire de la surface 11.1 sur le disque de réaction 23 déterminent l'effort Fi, à partir duquel s'opère le changement de rapport d'assistance. Ainsi, la détermination à la fois du rapport des sections et du réglage du ressort 30 sont nécessaires en plus de la prise en compte de la plasticité du matériau composant le disque de réaction 23.

De la même façon en fonction d'une charge du ressort 30 plus ou moins importante, le second point d'inflexion 20 de la courbe de la figure 2b interviendra plus ou moins tardivement. Plus la charge du ressort 30 est importante, plus l'effort Fi nécessaire pour déclencher une assistance plus importante et surtout supplémentaire est important. Dans cette configuration, la loi d'assistance de freinage est régie selon la section 17 de la courbe de la figure 2b. La charge du ressort doit, par contre, correspondre à un effort Fi inférieur à Fs effort de saturation pour lequel la chambre arrière 3 et avant 1 sont à la même pression ou pour laquelle la cloison 6 est avancée au maximum. Cette force Fs doit toujours correspondre à une force appliqué au circuit hydraulique supérieure à celle Fb pour laquelle un blocage des roues du véhicule survient.

Ce phénomène se produit jusqu'à ce que l'équilibre des appuis soit à nouveau atteint. Quand cet équilibre est atteint, le disque est à nouveau plat. Tant qu'il n'est pas atteint, le clapet 4 reste ouvert et l'assistance complémentaire se poursuit. Dans l'invention, on a préféré prévoir une assistance pneumatique complémentaire dont la pente tout en étant bien plus forte n'est pas exagérée.

Le clapet 4 est formé par un joint 4.3.Le siège 4.1 (et 4.2) du clapet 4 est ramené au contact de la valve 25.1 par l'action de réaction du ressort 22.6 qui appuie sur le dessous du joint 4.3. Le joint 4.3, de forme circulaire comporte deux rails en élévation 4.4 et 4.5 en appui étanche et coulissant contre un capuchon étanche et cylindrique 34 serti sur le piston 22. Le capuchon 34 comporte lui aussi deux rails 35 et 36 qui reçoivent en coulissement les deux rails 4.4 et 4.5. Le joint coulissant entre le rail 4.5 et le rail 36 est étanche. Le capuchon 35 est en appui sur le ressort 22.6 grâce à un ressort 35.1. Ce ressort est en tension entre la tige de commande 9 et un bord du capuchon 35. L'espace 38 entre les deux rails est communicant avec l'espace d'aspiration en aval du clapet 4 par un (ou des) percements 37 qui les mettent en relation. En agissant ainsi on évite que l'ouverture du clapet 4 provoque l'enfoncement du joint 4.3, au cas où le vide serait présent dans l'espace 38. De même ce percement 37 évite l'enfoncement du siège 4.2 lors du freinage brusque.

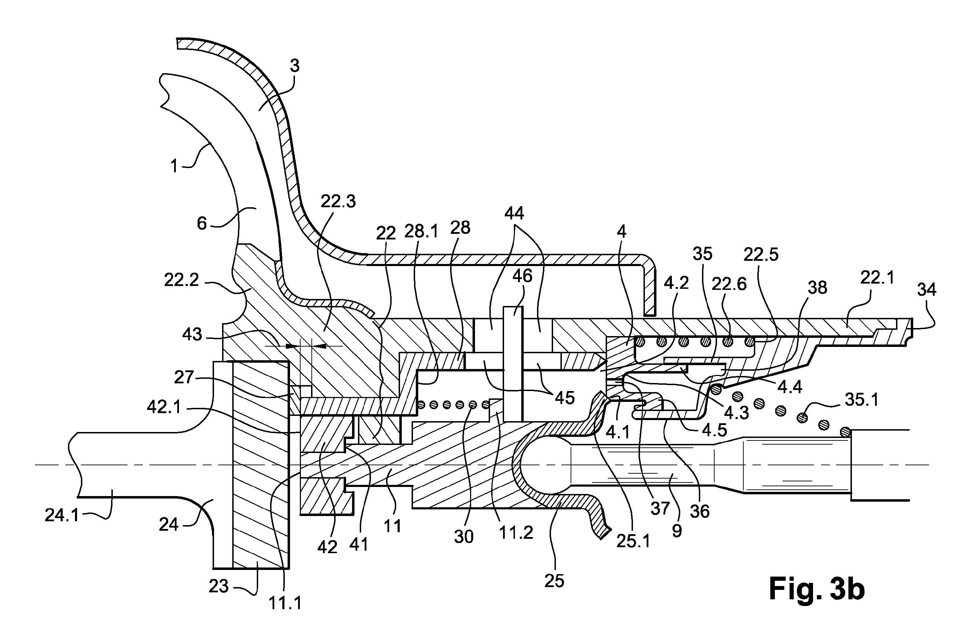

Sur la figure 3b, est représenté une variante préférée de l'invention. Sur cette figure sont conservés les numéros désignant les pièces communes à la figure 3a. Selon cette variante, le palpeur 11 comprend un épaulement 41 sur lequel prend appui une rondelle 42 dont une surface 42.1 est coplanaire avec la surface 11.1 du palpeur 11 à la position repos du servomoteur. La rondelle 42 est placée autour du palpeur et entourée de la canne creuse 28. Le ressort 30 est placée quant à lui, en tension, entre un décroché 28.1 de la canne 28 et un redan 11.2 du palpeur 11. Le piston 22, dont une partie coulisse le long et entre la canne 28 et le palpeur 11 pousse la rondelle 42. Des lumières 44 et 45 respectivement aménagées dans le piston 22 et la canne 28 permettent à ces derniers de coulisser le long d'une pièce 46, fixe et sur laquelle vient en butée le redan 11.2.

Les deux surfaces 11.1 et 42.1 sont alors au contact du disque de réaction 23. L'effet d'extrusion du disque de réaction 23 repousse, dans un second temps, à la fois le palpeur 11 et la pastille 27. Un jeu 43 entre le piston et la pastille, le long de la canne 28 permet à la canne de pousser et d'ouvrir le clapet 4. Le piston 22 est alors repoussé plus avant et appui d'avantage encore sur les surfaces au contact du disque de réaction 23 et de sorte que les surfaces respectivement 42.1 de la rondelle 42 et 11.1 du palpeur 11 soient, à nouveau, coplanaires. Dans ce cas, le jeu 43 est à nouveau rattrapé. Cette phase de freinage correspond alors à la partie 17 de la courbe 18 de la figure 2b.

## Revendications

1. Servomoteur pneumatique d'assistance de freinage à changement de rapport d'assistance comportant :
- une chambre avant (1) en relation avec une source de vide (2),
- une chambre arrière (3) en relation avec une arrivée haute pression (5),
- une cloison étanche (6) avec un corps de piston pneumatique le tout étant mobile entre les deux chambres,
- une tige de commande de frein (9),
- un disque de réaction (23),
- un circuit hydraulique (10) de freinage,
- un équipage mobile (8), emporté par la cloison mobile et par la tige de commande de frein et en réaction sur le circuit hydraulique de freinage,
- un premier dispositif d'admission pour admettre un fluide haute pression dans la chambre arrière grâce à l'ouverture d'un clapet (4) d'admission lors d'une poussée de la tige de commande au moment d'un freinage,
**caractérisé en ce qu'**il comporte
- un second dispositif d'admission (27-42) afin d'ouvrir en plus grand un clapet d'admission du fluide haute pression dans la chambre arrière et comporte un moyen (27) pour produire une extrusion du disque de réaction (23), orientée du coté de la tige de commande (9).

2. Servomoteur selon l'une la revendication **1, caractérisé en ce qu'**il comporte une canne creuse (28) dont une extrémité est en appui sur le disque de réaction (23) via une pastille (27) et dont l'autre extrémité est en appui sur le clapet (4) d'admission,

3. Servomoteur selon la revendication **2, caractérisé en ce qu'**un ressort précontraint (30) est en appui entre un décroché (28.1) de la canne creuse (28) du côté du disque de réaction (23) et un redan (11.2) du palpeur (11) sur lequel agit la tige de commande (9) et/ou entre un bossage (32) de la canne creuse (28) et une partie recourbée (22.7) du corps de piston (22).

4. Servomoteur selon la revendication **3, caractérisé en ce que** la charge du ressort (30) correspond à un effort intermédiaire (Fi) pour lequel se produit un changement du rapport d'assistance.

5. Servomoteur selon l'une des revendications **3** à **4, caractérisé en ce que** le ressort (30) possède une raideur réglée pour qu'une intervention du second dispositif d'admission (27-42) se produise pour un effort (Fi) dont la valeur est intermédiaire entre un effort correspondant au déclenchement de l'assistance par le premier dispositif d'admission tige de commande-cloison mobile et entre un effort (FS) de saturation de la chambre avant.

6. Servomoteur selon l'une des revendications **2** à **4, caractérisé en ce que** le clapet (4) comprend un joint 4.3 avec deux sièges, un siège 4.1 en appui sur la valve 25.1 et un joint 4.2 en appui sur une extrémité (28.2) en couronnement de la canne creuse (28).

7. Servomoteur selon l'une des revendications **2** à **4** et **6, caractérisé en ce que** le clapet (4) comprend un joint (4.3) coulissant sur deux rails (4.4 et 4.5) en élévation sur respectivement deux autres rails (35 et 36) d'un capuchon (34).

8. Servomoteur selon l'une des revendications **6** à **7, caractérisé en ce que** le joint (4.3) coulissant est muni de percements (37).

## Patentansprüche

1. Pneumatischer Bremskraftverstärker mit wechselndem Verstärkungsverhältnis, der Folgendes umfasst:
- eine vordere Kammer (1) in Verbindung mit einer Vakuumquelle (2),
- eine hintere Kammer (3) in Verbindung mit einer Hochdruckzufuhr (5)
- eine dichte Wand (6) mit einem Körper eines pneumatischen Kolbens, wobei das Ganze zwischen den zwei Kammern beweglich ist,
- einen Bremssteuerschaft (9),
- eine Reaktionsscheibe (23),
- einen hydraulischen Bremskreislauf (10),
- eine bewegliche Einheit (8), die von der beweglichen Wand und dem Bremssteuerschaft und als Reaktion auf den hydraulischen Bremskreislauf mitgeführt wird,
- eine erste Einlassvorrichtung, um ein Fluid unter hohem Druck in die hintere Kammer dank des Öffnens eines Einlassventils (4) bei einem Schub des Steuerschafts im Augenblick eines Bremsens einzulassen,
**dadurch gekennzeichnet, dass** er Folgendes umfasst:
- eine zweite Einlassvorrichtung (27-42), um ein Einlassventil des Fluids unter hohem Druck in die hintere Kammer weiter zu öffnen und mit einem Mittel (27), um eine Extrusion der Reaktionsscheibe (23) zu erzeugen, die zur Seite des Steuerschafts (9) ausgerichtet ist.

2. Bremskraftverstärker nach Anspruch 1, **dadurch gekennzeichnet, dass** er ein Hohltauchrohr (28) umfasst, von dem ein Ende auf der Reaktionsscheibe (23) über ein Plättchen (27) aufliegt, und dessen anderes Ende auf dem Einlassventil (4) aufliegt.

3. Bremskraftverstärker nach Anspruch 2, **dadurch gekennzeichnet, dass** eine vorgespannte Feder (30) zwischen einem Rücksprung (28.1) des Hohltauchrohrs (28) auf der Seite der Reaktionsscheibe (23) und einer Schikane (11.2) des Fühlers (11), auf den der Steuerschaft (9) einwirkt, aufliegt, und/oder zwischen einem Höcker (32) des Hohltauchrohrs (28) und einem zurückgebogenen Teil (22.7) des Kolbenkörpers (22).

4. Bremskraftverstärker nach Anspruch 3, **dadurch gekennzeichnet, dass** die Last der Feder (30) einer Zwischenkraft (Fi) entspricht, bei der ein Verstärkungsverhältniswechsel auftritt.

5. Bremskraftverstärker nach einem der Ansprüche 3 bis 4, **dadurch gekennzeichnet, dass** die Feder (30) eine eingestellte Steifigkeit aufweist, damit ein Eingriff der zweiten Einlassvorrichtung (27-42) bei einer Kraft (Fi) auftritt, deren Wert zwischen einer Kraft, die dem Auslösen der Verstärkung durch die erste Einlassvorrichtung aus Steuerschaft - beweglicher Wand entspricht, und einer Sättigungskraft (FS) der vorderen Kammer liegt.

6. Bremskraftverstärker nach einem der Ansprüche 2 bis 4, **dadurch gekennzeichnet, dass** das Ventil (4) eine Dichtung 4.3 mit zwei Sitzen, einen Sitz 4.1 in Auflage auf dem Ventil 25.1 und einen Sitz 4.2 in Auflage auf einem Ende (28.2), die das Hohltauchrohr (28) krönt, umfasst.

7. Bremskraftverstärker nach einem der Ansprüche 2 bis 4 und 6, **dadurch gekennzeichnet, dass** das Ventil (4) eine Dichtung (4.3) umfasst, die auf zwei Schienen (4.4 und 4.5) überhöht jeweils auf zwei anderen Schienen (35 und 36) einer Kappe (34) gleiten.

8. Bremskraftverstärker nach einem der Ansprüche 6 bis 7, **dadurch gekennzeichnet, dass** die Gleitdichtung (4.3) mit Bohrungen (37) versehen ist.

## Claims

1. Pneumatic brake booster with changing boost ratio comprising:
- a front chamber (1) in relation with a vacuum source (2),
- a rear chamber (3) in relation with a highpressure inlet (5),
- a sealed partition (6) with a pneumatic piston body, the whole being moveable between the two chambers,
- a brake control rod (9),
- a reaction disc (23),
- a hydraulic brake circuit (10),
- moving gear (8) carried along by the moving partition and by the brake control rod and in reaction with the hydraulic brake circuit,
- a first intake device for admitting a highpressure fluid in the rear chamber by virtue of the opening of an intake valve (4) during a thrust movement of the control rod at the time of a braking operation,
**characterized in that** it comprises
- a second intake device (27-42) in order to very widely open an intake valve for admitting the highpressure fluid in the rear chamber and comprising a means (27) for producing an extrusion of the reaction disc (23), oriented on the side of the control rod (9).

2. Booster according to Claim 1, **characterized in that** it comprises a hollow tube (28) of which one end bears on the reaction disc (23) via a pad (27) and of which the other end bears on the intake valve (4).

3. Booster according to Claim 2, **characterized in that** a preloaded spring (30) bears between an offset (28.1) of the hollow tube (28) on the side of the reaction disc (23) and a step (11.2) of the feeler (11) on which the control rod (9) acts and/or between a boss (32) of the hollow tube (28) and a curved part (22.7) of the piston body (22).

4. Booster according to Claim 3, **characterized in that** the load of the spring (30) corresponds to an intermediate force (Fi) for which a change of the boost ratio is produced.

5. Booster according to either of Claims 3 and 4, **characterized in that** the spring (30) has a controlled stiffness in order that an intervention of the second intake device (27-42) is produced for a force (Fi) of which the value is intermediate between a force corresponding to the triggering of the assistance by the first intake device control rod-moving partition and between a saturation force (FS) of the front chamber.

6. Booster according to one of Claims 2 to 4, **characterized in that** the valve (4) comprises a seal 4.3 with two seats, a seat 4.1 bearing on the valve 25.1 and a seat 4.2 bearing on a crown-like end (28.2) of the hollow tube (28).

7. Booster according to one of Claims 2 to 4 and 6, **characterized in that** the valve (4) comprises a seal (4.3) sliding on two rails (4.4 and 4.5) in elevation on respectively two other rails (35 and 36) of a cap (34).

8. Booster according to either of Claims 6 and 7, **characterized in that** the sliding seal (4.3) is provided with piercings (37).
